(19) **Europäisches Patentamt / European Patent Office / Office européen des brevets**

(11) **EP 4 490 005 B1**

(12) **FASCICULE DE BREVET EUROPÉEN**

(45) Date de publication et mention de la délivrance du brevet:
**14.01.2026 Bulletin 2026/03**

(21) Numéro de dépôt: **23707430.7**

(22) Date de dépôt: **02.02.2023**

(51) Classification Internationale des Brevets (IPC):
***B60W 30/16*** *(2020.01)*

(52) Classification Coopérative des Brevets (CPC):
**B60W 30/16; B60W 2552/53; B60W 2554/4045**

(86) Numéro de dépôt international:
**PCT/FR2023/050143**

(87) Numéro de publication internationale:
**WO 2023/170349 (14.09.2023 Gazette 2023/37)**

(54) **PROCÉDÉ DE SÉLECTION D'UN OBJET MOBILE POUR LA MISE EN OEUVRE D'UNE FONCTION DE RÉGULATION DE VITESSE ADAPTATIVE POUR UN VÉHICULE AUTOMOBILE**

VERFAHREN ZUR AUSWAHL EINES BEWEGLICHEN OBJEKTS ZUR IMPLEMENTIERUNG EINER ADAPTIVEN GESCHWINDIGKEITSREGELUNGSFUNKTION FÜR EIN KRAFTFAHRZEUG

METHOD FOR SELECTING A MOVING OBJECT FOR IMPLEMENTING AN ADAPTIVE CRUISE CONTROL FUNCTION FOR A MOTOR VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.03.2022 FR 2202019**

(43) Date de publication de la demande:
**15.01.2025 Bulletin 2025/03**

(73) Titulaire: **Stellantis Auto SAS**
**78300 Poissy (FR)**

(72) Inventeurs:
• **EL HANBALI, Hamza**
**Casablanca, 20580 (MA)**
• **ET-THAQFY, Yassine**
**Casablanca, 20620 (MA)**
• **LAHLOU, Zoubida**
**Casablanca, 20190 (MA)**

(74) Mandataire: **ESIP**
**Stellantis Auto SAS**
**Service REIP - YT800**
**43, rue Jean Pierre Timbaud**
**78300 Poissy (FR)**

(56) Documents cités:
**DE-A1- 102009 007 885    DE-A1- 102019 212 894**
**US-A1- 2017 305 422    US-A1- 2018 001 894**

**Description**

La présente invention concerne de manière générale les systèmes d'aide à la conduite également désignés par ADAS (acronyme anglosaxon pour « Advanced Driver-Assistance System ») équipant certains véhicules automobiles et s'intéresse plus particulièrement à un procédé de sélection d'un objet mobile pour la mise en œuvre d'une fonction de régulation de vitesse adaptative, appelée également fonction ACC, pour un véhicule automobile, appelé véhicule porteur.

La gestion des véhicules, appelés objets mobiles, évoluant dans l'environnement du véhicule porteur, est mise en œuvre par la fonction ACC qui est une des fonctions d'aide à la conduite offertes par le système ADAS.

La fonction ACC (acronyme anglosaxon pour en « Adaptive Cruise Control »), appelée également, régulation de vitesse adaptative, ajoute une assistance supplémentaire à la fonction de régulation de vitesse aujourd'hui présente dans la plupart des véhicules automobiles. La fonction ACC ajoute une régulation de distance à la régulation de vitesse. Pour cela, la fonction ACC utilise des moyens de mesure télémétrique (ou système de télémétrie) tel qu'un radar ou un laser pour la détection et le suivi de cibles mobiles sur la même voie que le véhicule, à l'avant du véhicule.

A la suite de l'acquisition et du traitement des signaux délivrés par le système de télémétrie, la fonction ACC permet de mesurer la distance et la vitesse d'approche d'un véhicule précédant le véhicule « porteur », et de définir un Temps Inter Véhicule plus connus au travers de son acronyme « TIV » qui peut être paramétrable avant l'activation de la fonction ACC. Par véhicule « porteur », on entend le véhicule qui est équipé de la fonction ACC. Le véhicule porteur est parfois également désigné par « ego véhicule » ou encore, véhicule « hôte ». On désigne également le véhicule précédant le véhicule porteur par véhicule « cible » ou plus simplement « cible ».

La fonction ACC permet d'autre part, d'ajuster la vitesse du véhicule porteur automatiquement afin de maintenir une distance de sécurité prenant en compte la vitesse du véhicule porteur et celle du véhicule cible. Cette distance de sécurité permet d'éviter la collision entre les deux véhicules. La fonction ACC est pilotée par le système ADAS qui commande le régulateur du vitesse du véhicule appelé également régulateur ACC.

La fonction ACC du système ADAS met en œuvre des moyens de détection et de suivi de cibles tels qu'un un radar dit « radar ACC » (ou un laser), qui est généralement positionné à l'avant du véhicule porteur derrière le parechoc avant du véhicule porteur. Il est souvent couplé à un autre type de caméra, caméra frontale et/ou multifonction, qui elle, est disposée au niveau du rétroviseur de l'habitacle en haut du pare-brise du véhicule porteur.

Les signaux captés par le radar (ou laser) ACC sont traitées par des moyens logiciels spécialisés dans la reconnaissance des signaux radar (ou laser) et sont traduits en informations de distance et de vitesse (et donc de temps).

Outre la détection et le suivi de véhicules « cible » dans la voie du véhicule « porteur », il est également nécessaire de prendre en compte des véhicules ou « objets mobiles », désigné simplement par « objets », détectés dans les voies adjacentes à celle du véhicule « porteur » et qui sont susceptibles de changer de voie pour venir se positionner dans la voie suivie par le véhicule porteur, devant le véhicule. C'est notamment le cas dans des manœuvres dites de déboitement et de rabattement, sur les réseaux routiers à plusieurs voies notamment les autoroutes. Pour cela, la fonction ACC est capable d'identifier un déboitement (l'entrée d'un objet dans la voie du véhicule porteur et qui devient alors une cible) : « cut-in » en terminologie anglo-saxonne, et un « rabattement » (la sortie de l'objet de la voie du véhicule porteur) : « cut-out » en terminologie anglo-saxonne.

Il faut donc que la fonction ACC détecte et sélectionne ou à l'inverse désélectionne les objets, susceptibles soit de rentrer sur, soit de sortir de, la voie du véhicule porteur, ni trop tôt ni trop tard.

Parmi les défauts majeurs rencontrés dans la sélection des objets détectés, ce sont les sélections ou désélections tardives des objets qui effectuent un changement de voie : sélection pour des objets qui viennent des voies adjacentes et qui rentrent dans la voie du véhicule porteur et désélection des objets qui étaient considérés comme des « cibles » et qui quittent la voie du véhicule porteur vers les voies adjacentes de gauche ou de droite.

Le fait de sélectionner un objet détecté, comme cible après son entrée dans la voie du véhicule porteur, est considéré comme une sélection tardive, ce qui entraine des freinages forts du véhicule porteur et/ou une régulation de vitesse par à coup.

Et le fait de désélectionner une cible après que cette dernière ait quitté la voie du véhicule porteur est également considéré comme une désélection tardive car cela entraine une perte de temps dans la sélection de la future cible, avec les même désagréments que pour une sélection tardive.

En outre, l'état de la technique est connu des documents DE102009007885A et US2017305422A.

La présente invention a pour but de remédier à ces inconvénients en proposant une solution permettant d'anticiper des « cut-in » et des « cut-out » pour la sélection de cibles potentielles et la désélection des cibles et ainsi de rendre proactive la fonction ACC vis-à-vis de ces événements.

A cet effet, la présente invention a pour premier objet, un procédé de sélection d'un objet mobile pour la mise en œuvre d'une fonction de régulation de vitesse adaptative, appelée fonction ACC, d'un véhicule, appelé véhicule porteur consistant :

- à détecter des objets circulant sur la même voie que celle du véhicule porteur et/ou sur l'une des voies ou les deux voies adjacentes à la voie du véhicule porteur, dans le même sens de circulation que le véhicule porteur ;

- pour un objet détecté dans la voie du véhicule porteur, à calculer la probabilité P(LLC) que l'objet effectue un changement de voie, de la voie du véhicule porteur vers la voie adjacente de gauche et la probabilité P(RLC) que l'objet effectue un changement de voie, de la voie du véhicule porteur vers la voie adjacente de droite ;
- pour un objet détecté dans la voie adjacente de gauche de la voie du véhicule porteur, à calculer la probabilité P(RLC) que ledit objet fasse un changement de voie vers la droite ;
- pour un objet détecté dans la voie adjacente de droite de la voie du véhicule porteur, à calculer la probabilité P(LLC) que ledit objet fasse un changement de voie vers la gauche ; et
- à sélectionner un objet sur la voie adjacente de gauche et/ou sur la voie adjacente de droite quand le résultat de l'équation de probabilité de changement de voie vers la voie de droite P(RLC) et/ou de changement de voie respectivement vers la voie de gauche P(LLC), est égal à « 1 » et que le ou lesdits objets ont été détectés sur la voie adjacente de gauche et/ou sur la voie adjacente de droite ;
- à désélectionner un objet se trouvant sur la voie du véhicule porteur quand le résultat de l'équation de probabilité de changement de voie vers la gauche P(LCC) ou le résultat de l'équation de probabilité de changement de voie vers la droite P(RLC) est égal à « 1 » et que ledit objet a été détecté sur la voie du véhicule porteur.

Selon une caractéristique, le procédé consiste :

- dans une première étape préalable, à sélectionner des premier et deuxième ensembles de variables binaires déterminés aptes à définir des caractéristiques physiques d'un objet mobile et des informations relatives à la configuration d'une voie, dans des situations de préparation à un changement de voie respectivement sur la gauche ou sur la droite ; chacune des variables étant aptes à prendre l'état « 0 » ou « 1 » en fonction d'un seuil déterminé ;
- dans une deuxième étape préalable, à établir des relations de causalité et de dépendances entre les variables de chaque premier et deuxième ensemble ;
- dans une troisième étape préalable, à partir des relations de causalité et de dépendances entre les variables des premier et deuxième ensembles, à établir des première et deuxième équations de probabilités P(LLC) et P(RLC) qu'un objet mobile détecté, s'engage dans un changement de voie sur la gauche, respectivement sur la droite ; la sélection ou désélection d'un objet mobile détecté étant conditionnées par le résultat des première et deuxième équations de probabilité P(LLC) et P(RLC).

Selon une autre caractéristique, le premier ensemble de variables comprend la variable EVG définissant l'existence d'une voie adjacente à gauche d'un objet, la variable VLG définissant la vitesse latérale gauche de l'objet, la variable CV définissant la courbure de la voie, la variable ALG définissant l'angle de lacet à gauche ; ces variables permettant de calculer la probabilité P(LLC) qu'un objet mobile détecté, présent dans la voie ou dans la voie adjacente à droite de la voie du véhicule porteur s'engage dans un changement de voie sur la gauche, à partir de la formule : $P(LLC \mid VLG,CV,ALG,EVG) = P(EVG) * P(LLC \mid VLG,CV,ALG)$, et dans lequel le deuxième ensemble de variables comprend la variable EVD définissant l'existence d'une voie adjacente à droite d'un objet, la variable VLD définissant la vitesse latérale droite d'un objet, la variable CV définissant la courbure de la voie et la variable ALD définissant l'angle de lacet à droite ; ces variables permettant de calculer la probabilité P(RLC) qu'un objet mobile détecté, présent dans la voie ou dans la voie adjacente à gauche de la voie du véhicule porteur s'engage dans un changement de voie sur la droite, à partir de la formule : $P(RLC \mid VLD, CV, ALD, EVD) = P(EVD) * P(RLC \mid VLD, CV, ALD)$.

Selon une autre caractéristique, le procédé consiste à sélectionner un objet si $P(RLC \mid VLD, CV, ALD, EVD) = 1$, et si l'objet détecté est dans la voie adjacente, à gauche de la voie du véhicule porteur.

Selon une autre caractéristique, le procédé consiste à sélectionner un objet si $P(LLC \mid VLG, CV, ALG, EVG) = 1$, et si l'objet détecté est dans la voie adjacente, à droite de la voie du véhicule porteur.

Selon une autre caractéristique, le procédé consiste à désélectionner un objet si, $P(RLC \mid VLD, CV, ALD, EVD) = 1$ ou $P(LLC \mid VLG, CV, ALG, EVG) = 1$, et si l'objet détecté est dans la voie du véhicule porteur.

L'invention a pour deuxième objet, un produit programme d'ordinateur comportant des instructions qui, lorsque le programme est exécuté par un ordinateur, conduisent celui-ci à mettre en œuvre les étapes du procédé tel que décrit ci-dessus.

L'invention a pour troisième objet, un véhicule automobile mettant en œuvre le procédé tel que décrit ci-dessus.

D'autres avantages et caractéristiques pourront ressortir plus clairement de la description qui va suivre, donnée uniquement à titre d'exemple non limitatif et faite en se référant aux dessins dans lesquels :

[Fig. 1] illustre une situation routière dans laquelle le procédé selon l'invention est mis en œuvre ;

[Fig. 2] illustre un schéma-bloc d'un véhicule mettant en œuvre le procédé selon l'invention ;

[Fig. 3] illustre la variable ALG prise en compte par le procédé selon l'invention ;

[Fig. 4] illustre la variable ALD prise en compte par le procédé selon l'invention ;

[Fig. 5] illustre la variable DLG prise en compte par le procédé selon l'invention ;

[Fig. 6] illustre la variable DLD prise en compte par le procédé selon l'invention ;

[Fig. 7] illustre un schéma-bloc d'une première architecture des relations de causalité et de dépendances entre des variables d'un premier ensemble de variables, prise en compte par le procédé selon l'invention ;

[Fig. 8] illustre un schéma-bloc d'une deuxième architecture des relations de causalité et de dépendances entre variables d'un deuxième ensemble de variables, prise en compte par le procédé selon l'invention ; et

[Fig. 9] illustre un logigramme des étapes du procédé selon l'invention.

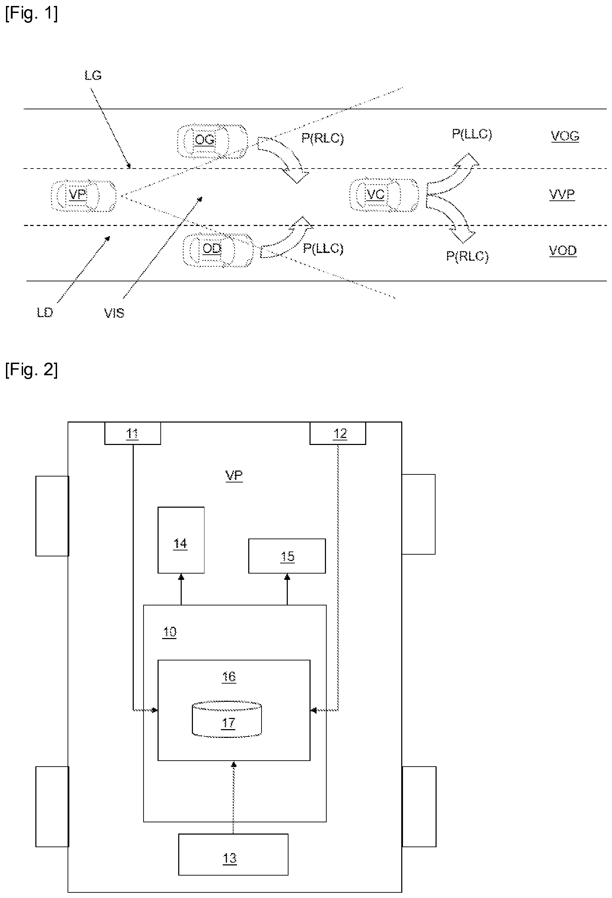

La figure 1 illustre une situation routière déterminée dans laquelle quatre véhicules VP, VC, OG et OD circulent sur trois voies de circulation adjacentes : une voie centrale VVP et deux voies adjacentes, respectivement, à gauche VOG et à droite VOD de la voie centrale VVP. Les quatre véhicules VP, VC, OG et OD circulent dans le même sens de circulation. Les voies adjacentes VOG et VOD sont respectivement séparées de la voie centrale VVP, par deux lignes discontinues LG et LD. Un premier véhicule, véhicule porteur VP, circule sur la voie centrale VVP. Il est précédé sur sa voie de circulation VVP par un deuxième véhicule, véhicule cible VC. Un troisième véhicule, objet mobile OG, circule sur la voie adjacente de gauche VOG et un quatrième véhicule, objet mobile OD, circule sur la voie adjacente de droite VOD. Les quatre véhicules VP, OG, OD et VC sont dans le champ de vision VIS du véhicule porteur VP via une caméra et/ou un radar (ou laser) embarqués dans le véhicule porteur VP et introduits ci-dessous.

La figure 2 illustre schématiquement sous forme d'un schéma-bloc, un véhicule porteur VP comportant un système ADAS 10, mettant en œuvre le procédé selon l'invention.

Le système ADAS 10 est couplé à au moins un radar (ou laser) ACC 11. Il est configuré pour implémenter la fonction ACC pour la détection et le suivi d'objets mobiles en coopération avec une caméra frontale (ou multifonction) 12 et autres capteurs 13 du véhicule porteur VP parmi lesquels : des capteurs de pédales (frein, accélérateur, embrayage), un capteur d'angle volant (angle de rotation du volant de direction), un capteur de rapport de vitesse engagé dans la boite de vitesses, un indicateur de changement de direction (clignotant), un capteur d'angle de lacet ou cap, un capteur de vitesses longitudinale et latérale, etc.

Le système ADAS 10 agit sur des organes de contrôle du comportement dynamique du véhicule VP dont au moins un organe de contrôle longitudinal 14 (régulateur de vitesse) et un organe de contrôle latéral 15.

Le système ADAS 10 comporte en outre un dispositif de traitement 16 agencé pour à partir des informations délivrées par le radar ACC 11, la caméra 12 et les autres capteurs 13 du véhicule porteur VP, calculer la probabilité de changement de voie d'un objet dans la voie ou dans les voies adjacentes du véhicule porteur VP, se basant sur des relations de causalité et de dépendances déterminées entre différentes variables choisies, définissant respectivement les caractéristiques physiques des objets environnants (positions longitudinale et latérale, vitesses longitudinale et latérale, ...) et les informations relatives à la configuration des voies (courbures, existence des voies, polynômes des lignes, ...). Ce dispositif de traitement 16 met en œuvre notamment un ou des algorithmes 17 implémentant les modèles.

On introduit ci-après, les variables binaires utilisées par le procédé selon l'invention pour le calcul des probabilités. Ces variables sont choisies en fonction de la pertinence des grandeurs qu'elles caractérisent et de leurs relations dans des situations de préparation, ou intention, de changement de voie.

En fonction d'un seuil déterminé atteint ou pas par les caractéristiques physiques ou les informations auxquelles se rapportent les variables, elles prennent pour état un « 1 » ou un « 0 ».

La variable **EVD** (Existence Voie Droite) définit l'existence d'une voie adjacente à droite de celle de l'objet. Si la qualité de la voie adjacente à droite de l'objet est supérieure à un seuil S1 (0,8 par exemple), et si l'existence de la voie adjacente à droite de l'objet est supérieure à un seuil S2 (0,8 par exemple), alors on estime qu'il existe bien une voie adjacente à droite de celle de l'objet, et par conséquent EVD = 1, sinon EVD = 0.

L'existence est un indicateur qui reflète la probabilité d'existence d'une voie, autrement dit un indicateur de confiance sur l'existence d'une voie. Il est généralement compris entre 0 et 1. Un seuil S2 supérieur à 0,8 traduit une confiance supérieure à la moyenne sur l'existence de la voie. La qualité d'une voie est un indicateur qui est basé sur la largeur de la voie, la perception suffisante des lignes de la voie, la portée des lignes de la voie. Cet indicateur est compris entre 0 et 1. Un seuil S1 supérieur à 0,8 traduit une voie de qualité supérieure à la moyenne.

La variable **EVG** (Existence Voie Gauche) définit l'existence d'une voie adjacente à gauche de celle de l'objet. Si la qualité de la voie adjacente à gauche de l'objet est supérieure à un seuil S3 (0,8 par exemple), et si l'existence de la voie adjacente à gauche de l'objet est supérieure à un seuil S4 (0,8 par exemple), alors on estime qu'il existe bien une voie adjacente à gauche de celle de l'objet, et par conséquent EVG = 1, sinon EVG = 0.

La variable **CV** (Courbure de la Voie) définit la possibilité pour l'objet d'effectuer un changement de voie étant donné la courbure de la voie.

Pour cela, on définit un seuil de courbure S5 de la voie en dessous duquel, on estime qu'un changement de voie est possible, et donc CV = 1, et au-dessus duquel un changement de voie est peu probable, et donc CV = 0.

La variable **VLD** (Vitesse Latérale Droite) définit la dynamique latérale de l'objet vers la droite. Si l'objet a une vitesse latérale vers la droite supérieure à un seuil S6 déterminé (seuil différent de 0), alors VLD = 1, sinon VLD = 0.

La variable **VLG** (Vitesse Latérale Gauche) définit la dynamique latérale de l'objet, vers la gauche. Si l'objet à une vitesse latérale vers la gauche supérieure à un seuil S7 déterminé (seuil différent de 0) alors VLG = 1, sinon VLD = 0.

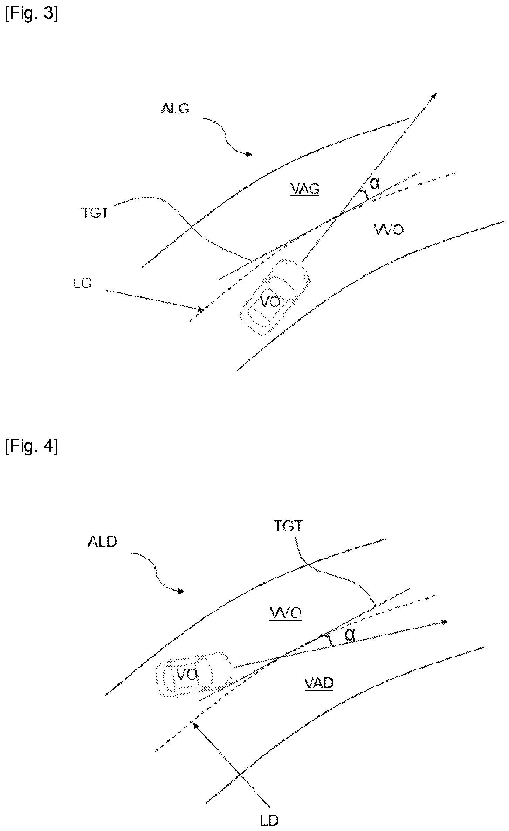

La variable **ALG** (Angle de Lacet Gauche) définit l'angle de lacet $\alpha$ de l'objet VO entre le centre véhicule et la tangente TGT à la ligne LG que l'objet VO, circulant sur sa voie VVO, doit traverser pour rejoindre la voie de destination (adjacente) sur la gauche VAG (Figure 3).

Si l'angle $\alpha$ est supérieur à un seuil déterminé S8, ce qui signifie que le conducteur s'oriente vers un changement de voie, et donc ALG = 1, sinon ALG = 0.

La variable **ALD** (Angle de Lacet Droite) l'angle de lacet $\alpha$ de l'objet VO entre le centre véhicule et la tangente TGT à la ligne LD que l'objet VO, circulant sur sa voie VVO, doit traverser pour rejoindre la voie de destination (adjacente) sur la droite VAD (Figure 4).

Si l'angle $\alpha$ est supérieur au seuil déterminé S9, ce qui signifie que le conducteur s'oriente vers un changement de voie, et donc ALD = 1, sinon ALD = 0.

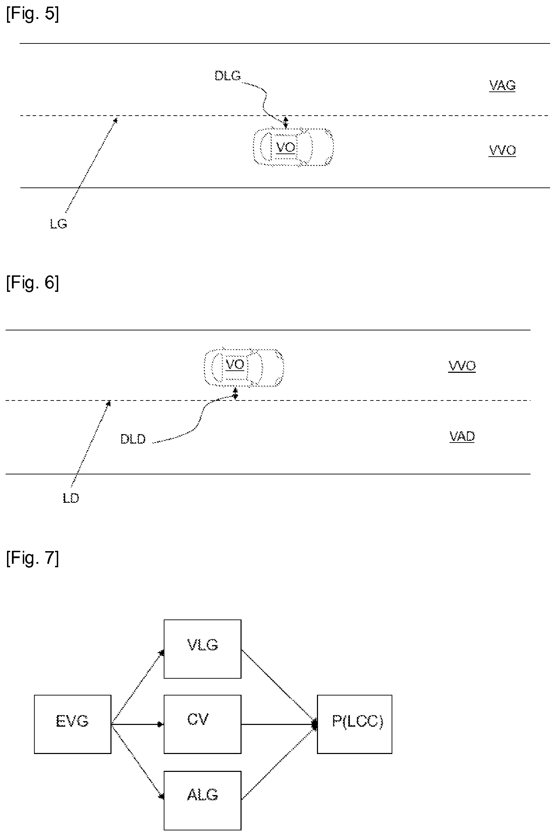

La variable **DLG** (Distance à la Ligne Gauche) définit la distance de l'objet VO par rapport à la ligne gauche LG séparant la voie VVO de l'objet VO, de la voie adjacente de gauche VAG (Figure 5).

Si la distance est inférieure à un seuil S10, alors DLG = 1, sinon DLG = 0.

La variable **DLD** (Distance à la Ligne Droite) définit la distance de l'objet VO par rapport à la ligne droite LD séparant la voie VVO de l'objet VO, de la voie adjacente de droite VAD (Figure 6).

Si la distance est inférieure à un seuil S11, alors DLD = 1, sinon DLD = 0.

Le procédé exploite des architectures (ou modèles) de relations de causalité et de dépendances entre ces variables pour calculer la probabilité qu'un objet fasse un changement de voie vers la voie gauche P(LLC) ou un changement de voie vers la droite P(RLC).

La figure 7 illustre une première architecture de relations de causalité et de dépendances entre un premier ensemble de variables choisies déterminées permettant de calculer la probabilité P(LLC) qu'un objet fasse un changement de voie vers la voie de gauche « LLC », acronyme anglosaxon pour « Left Lane Change ».

Ce premier ensemble de variables comprend les variables VLG, CV, ALG et EVG définies ci-dessus.

Pour calculer la probabilité qu'un objet fasse un changement de voie vers la voie de gauche LLC, le procédé calcule la probabilité conditionnelle que la probabilité P(LLC) soit égale à « 1 » en considérant les variables VLG, CV, ALG et EVG introduites ci-dessus.

Cette probabilité conditionnelle s'exprime par la formule ci-dessous :

$$P(LLC \mid VLG, CV, ALG, EVG) = P(EVG) * P(LLC|VLG, CV, ALG)$$

Pour un objet détecté via la fonction ACC :
Si :

$$P(LLC \mid VLG, CV, ALG, EVG) = 1$$

Alors, si l'objet détecté est dans une voie adjacente (présageant un « cut-in ») alors le procédé sélectionne l'objet en question.

Si l'objet détecté est dans la voie du véhicule porteur (présageant un « cut-out ») alors le procédé désélectionne l'objet.

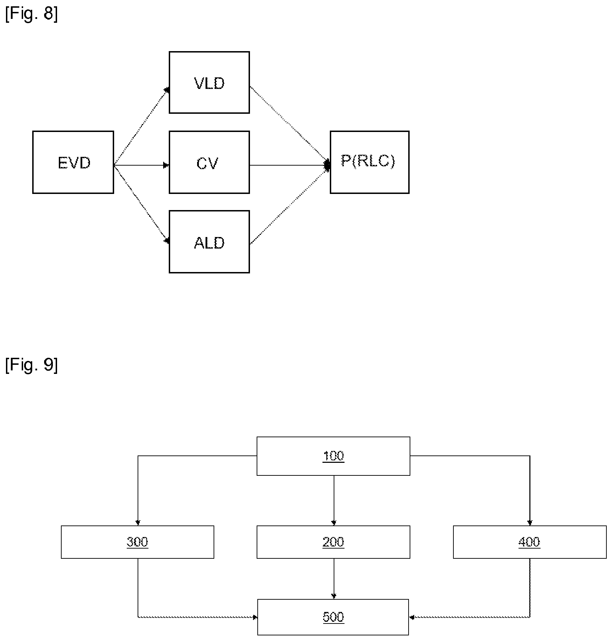

La figure 8 illustre une deuxième architecture de relations de causalité et de dépendances entre un deuxième ensemble de variables choisies déterminées permettant de calculer la probabilité P(RLC) qu'un objet fasse un changement de voie vers la voie de droite « RLC », acronyme anglosaxon pour « Right Lane Change ».

Ces variables sont les variables VLD, CV, ALD et EVD.

Pour calculer la probabilité qu'un objet fasse un changement de voie vers la voie de droite, le procédé calcule la probabilité conditionnelle que la probabilité P(RLC) soit égale à « 1 » en considérant les variables VLD, CV, ALD et EVD introduites ci-dessus.

Cette probabilité conditionnelle s'exprime par la formule ci-dessous :

$$P(RLC \mid VLD, CV, ALD, EVD) = P(EVD) * P(RLC \mid VLD, CV, ALD)$$

Pour un objet détecté via la fonction ACC :
Si :

$$P(RLC \mid VLD, CV, ALD, EVD) = 1$$

Alors, si l'objet détecté est dans une voie adjacente (présageant un « cut-in »), le procédé sélectionne l'objet en question.

Si l'objet détecté est identifié dans la voie du véhicule porteur (présageant un « cut-out ») alors, le procédé désélectionne l'objet.

Le procédé selon l'invention, illustré par le logigramme de la figure 9, consiste dans une première étape 100 à détecter des objets OG, VC, OD circulant sur la même voie VVP que celle du véhicule porteur VP et/ou sur l'une des voies ou les deux voies adjacentes VOG, VOD à la voie VVP du véhicule porteur VP, dans le même sens de circulation que le véhicule porteur VP.

Dans une étape 200, pour un objet (cible) VC détecté dans la voie VVP du véhicule porteur VP, le procédé calcule la probabilité P(LLC) que la cible VC effectue un changement de voie, de la voie VVP du véhicule porteur VP vers la voie adjacente de gauche VOG et la probabilité P(RLC) que la cible VC effectue un changement de voie, de la voie VVP du véhicule porteur VP vers la voie adjacente de droite VOD.

Dans une étape 300, pour l'objet OG détecté dans la voie adjacente de gauche VOG, le procédé calcule la probabilité P(RLC) que cet objet OG fasse un changement de voie vers la voie de droite. Dans une étape 400, pour l'objet OD détecté dans la voie adjacente de droite VOD, le procédé calcule la probabilité P(LLC) que cet objet OD fasse un changement de voie vers la voie de gauche. Dans une étape 500, le résultat de chacune de ces équations de probabilité P(LLC), P(RLC) est pris en compte pour sélectionner un objet OG, OD comme cible, ou désélectionner un objet cible VC, en fonction de la voie VOG, VOD, VVP dans laquelle l'objet OG, VC et OD a été détecté.

Ainsi, si l'objet OG, OD se trouve sur la voie adjacente de gauche VOG, respectivement de droite VOD et que le résultat de son équation de probabilité de changement de voie vers la droite P(RLC), respectivement vers la gauche P(LLC), est égal à « 1 » alors cet objet OG, OD est sélectionné par la fonction ACC. La cible VC se trouvant sur la voie VVP du véhicule porteur VP, est désélectionnée quand le résultat de l'équation de probabilité que la cible change de voie vers la voie de gauche P(LLC) ou à vers la voie de droite P(RLC) est égal à « 1 ».

Le procédé implémente un produit programme d'ordinateur comportant des instructions pour l'exécution des étapes du procédé décrit ci-dessus.

Ce programme est implémenté par un ou plusieurs processeurs du système ADAS (superviseur ADAS) du véhicule en lien avec un ou plusieurs processeurs du système IVI (In-Vehicle Infotainment) qui est l'organe central du véhicule dédié au traitement des données et à la communication avec le conducteur.

Un tel programme pourra être mis à jour avec possibilité d'ajout de fonctions en utilisant une mise à jour par voie d'ondes de type OTA« Over The Air ».

## Revendications

**1.** Procédé de sélection d'un objet mobile pour la mise en œuvre d'une fonction de régulation de vitesse adaptative, appelée fonction ACC, d'un véhicule, appelé véhicule porteur (VP) consistant :

- à détecter (100) des objets (OG, VC, OD) circulant sur la même voie (VVP) que celle du véhicule porteur (VP) et/ou sur l'une des voies ou les deux voies adjacentes (VOG, VOD) à la voie (VVP) du véhicule porteur (VP), dans le même sens de circulation que le véhicule porteur (VP) ;
- pour un objet (VC) détecté dans la voie (VVP) du véhicule porteur (VP), à calculer (200) la probabilité P(LLC) que l'objet (VC) effectue un changement de voie, de la voie (VVP) du véhicule porteur (VP) vers la voie adjacente de gauche (VOG) et la probabilité P(RLC) que l'objet (VC) effectue un changement de voie, de la voie (VVP) du véhicule porteur (VP) vers la voie adjacente de droite (VOD) ;
- pour un objet (OG) détecté dans la voie adjacente de gauche (VOG) de la voie (VVP) du véhicule porteur (VP), à calculer (300) la probabilité P(RLC) que ledit objet (OG) fasse un changement de voie vers la droite ;
- pour un objet (OD) détecté dans la voie adjacente de droite (VOD) de la voie (VVP) du véhicule porteur (VP), à calculer (400) la probabilité P(LLC) que ledit objet (OD) fasse un changement de voie vers la gauche ; et
- à sélectionner un objet (OG, OD) sur la voie adjacente de gauche (VOG) et/ou sur la voie adjacente de droite (VOD) quand le résultat de l'équation de probabilité de changement de voie vers la voie de droite P(RLC) et/ou de changement de voie respectivement vers la voie de gauche P(LLC), est égal à « 1 » et que le ou lesdits objets (OG, OD) ont été détectés sur la voie adjacente de gauche (VOG) et/ou sur la voie adjacente de droite (VOD) ;
- à désélectionner un objet (VC) se trouvant sur la voie (VVP) du véhicule porteur (VP) quand le résultat de l'équation de probabilité de changement de voie vers la gauche P(LCC) ou le résultat de l'équation de probabilité de changement de voie vers la droite P(RLC) est égal à « 1 » et que ledit objet a été détecté sur la voie (VVP) du véhicule porteur (VP).

2. Procédé selon la revendication 1 consistant :

- dans une première étape préalable, à sélectionner des premier et deuxième ensembles de variables binaires déterminés aptes à définir des caractéristiques physiques d'un objet mobile et des informations relatives à la configuration d'une voie, dans des situations de préparation à un changement de voie respectivement sur la gauche ou sur la droite ; chacune des variables étant aptes à prendre l'état « 0 » ou « 1 » en fonction d'un seuil déterminé (S) ;
- dans une deuxième étape préalable, à établir des relations de causalité et de dépendances entre les variables de chaque premier et deuxième ensemble ;
- dans une troisième étape préalable, à partir des relations de causalité et de dépendances entre les variables des premier et deuxième ensembles, à établir des première et deuxième équations de probabilités P(LLC) et P(RLC) qu'un objet mobile détecté, s'engage dans un changement de voie sur la gauche, respectivement sur la droite ; la sélection ou désélection d'un objet mobile détecté étant conditionnées par le résultat des première et deuxième équations de probabilité P(LLC) et P(RLC).

3. Procédé selon la revendication précédente, dans lequel le premier ensemble de variables comprend la variable EVG définissant l'existence d'une voie adjacente à gauche d'un objet, la variable VLG définissant la vitesse latérale gauche de l'objet, la variable CV définissant la courbure de la voie, la variable ALG définissant l'angle de lacet à gauche ; ces variables permettant de calculer la probabilité P(LLC) qu'un objet mobile détecté, présent dans la voie (VVP) ou dans la voie adjacente à droite (VOD) de la voie (VVP) du véhicule porteur (VP) s'engage dans un changement de voie sur la gauche (LLC), à partir de la formule : $P(LLC \,|\, VLG, CV, ALG, EVG) = P(EVG) * P(LLC | VLG, CV, ALG)$, et dans lequel le deuxième ensemble de variables comprend la variable EVD définissant l'existence d'une voie adjacente à droite d'un objet, la variable VLD définissant la vitesse latérale droite d'un objet, la variable CV définissant la courbure de la voie et la variable ALD définissant l'angle de lacet à droite ; ces variables permettant de calculer la probabilité P(RLC) qu'un objet mobile détecté, présent dans la voie (VVP) ou dans la voie adjacente à gauche (VOG) de la voie (VVP) du véhicule porteur (VP) s'engage dans un changement de voie sur la droite (RLC), à partir de la formule : $P(RLC \,|\, VLD, CV, ALD, EVD) = P(EVD) * P(RLC \,|\, VLD, CV, ALD)$.

4. Procédé selon la revendication précédente, consistant à sélectionner un objet (OG) si $P(RLC \,|\, VLD, CV, ALD, EVD) = 1$, et si l'objet détecté est dans la voie adjacente, à gauche (VOG) de la voie (VVP) du véhicule porteur (VP).

5. Procédé selon la revendication 3, consistant à sélectionner un objet (OD) si $P(LLC \,|\, VLG, CV, ALG, EVG) = 1$, et si l'objet détecté est dans la voie adjacente, à droite (VOD) de la voie (VVP) du véhicule porteur (VP).

6. Procédé selon la revendication 3, consistant à désélectionner un objet (VC) si, $P(RLC \,|\, VLD, CV, ALD, EVD) = 1$ ou $P(LLC \,|\, VLG, CV, ALG, EVG) = 1$, et si l'objet détecté (VC) est dans la voie du véhicule porteur (VP).

7. Produit programme d'ordinateur comportant des instructions qui, lorsque le programme est exécuté par un ordinateur, conduisent celui-ci à mettre en œuvre les étapes du procédé selon l'une des revendications 1 à 6.

8. Véhicule automobile (VP) mettant en œuvre le procédé selon l'une des revendications 1 à 6.

**Patentansprüche**

1. Verfahren zur Auswahl eines sich bewegenden Objekts zur Implementierung einer adaptiven Geschwindigkeitsregelungsfunktion, der sogenannten ACC-Funktion, eines Fahrzeugs, des sogenannten Trägerfahrzeugs (VP), bestehend aus:

- um (100) Objekte (OG, VC, OD) zu erkennen, die sich auf der gleichen Fahrspur (VVP) wie das Transportfahrzeug (VP) und/oder auf einer oder beiden der an die Fahrspur (VVP) des Transportfahrzeugs (VP) angrenzenden Fahrspuren (VOG, VOD) in der gleichen Fahrtrichtung wie das Transportfahrzeug (VP) befinden;

- für ein Objekt (VC), das in der Fahrspur (VVP) des Trägerfahrzeugs (VP) erkannt wird, die Wahrscheinlichkeit P(LLC) zu berechnen, dass das Objekt (VC) einen Fahrspurwechsel von der Fahrspur (VVP) des Trägerfahrzeugs (VP) auf die angrenzende linke Fahrspur (VOG) vornimmt, und die Wahrscheinlichkeit P(RLC), dass das Objekt (VC) einen Fahrspurwechsel von der Fahrspur (VVP) des Trägerfahrzeugs (VP) auf die angrenzende rechte Fahrspur (VOD) vornimmt;

- für ein Objekt (OG), das in der linken angrenzenden Fahrspur (VOG) der Fahrspur (VVP) des Transportfahrzeugs (VP) erkannt wird, die Wahrscheinlichkeit P(RLC) zu berechnen, dass dieses Objekt (OG) einen Fahrspurwechsel nach rechts vornimmt;

- Berechnen Sie (400) die Wahrscheinlichkeit P(LLC), dass ein Objekt (OD), das sich auf der rechten Nachbarspur (VOD) der Fahrspur (VVP) des Transportfahrzeugs (VP) befindet, die Fahrspur nach links wechselt; und

- ein Objekt (OG, OD) auf der linken angrenzenden Fahrspur (VOG) und/oder auf der rechten angrenzenden Fahrspur (VOD) auszuwählen, wenn das Ergebnis der Wahrscheinlichkeitsgleichung für einen Fahrspurwechsel auf die rechte Fahrspur P(RLC) und/oder für einen Fahrspurwechsel auf die linke Fahrspur P(LLC) gleich "1" ist und dass das/die genannte(n) Objekt(e) (OG, OD) auf der linken angrenzenden Fahrspur (VOG) und/oder auf der rechten angrenzenden Fahrspur (VOD) erkannt wurde(n);

- ein Objekt (VC), das sich auf der Fahrspur (VVP) des Trägerfahrzeugs (VP) befindet, abzuwählen, wenn das Ergebnis der Wahrscheinlichkeitsgleichung für einen Spurwechsel nach links P(LCC) oder das Ergebnis der Wahrscheinlichkeitsgleichung für einen Spurwechsel nach rechts P(RLC) gleich "1" ist und das Objekt auf der Fahrspur (VVP) des Trägerfahrzeugs (VP) erkannt wurde.

2.  Verfahren nach Anspruch 1, bestehend aus:

    - **in einem vorbereitenden ersten Schritt erste und** zweite Sätze spezifischer binärer Variablen auszuwählen, die geeignet sind, die physikalischen Eigenschaften eines sich bewegenden Objekts und Informationen über die Konfiguration einer Fahrspur zu definieren, in vorbereitenden Situationen jeweils einen Spurwechsel nach links oder rechts; wobei jede der Variablen je nach einem festgelegten Schwellenwert (S) den Zustand "0" oder "1" annehmen kann;

    - in einem zweiten vorbereitenden Schritt, um Kausal- und Abhängigkeitsbeziehungen zwischen den Variablen jedes ersten und zweiten Satzes herzustellen;

    - in einem dritten vorbereitenden Schritt, aus den Kausalbeziehungen und Abhängigkeiten zwischen den Variablen der ersten und zweiten Menge , um die erste und zweite Wahrscheinlichkeitsgleichung P(LLC) und P(RLC) aufzustellen, dass ein erkanntes sich bewegendes Objekt einen Spurwechsel nach links bzw. nach rechts vornimmt; die Auswahl oder Nichtauswahl eines erkannten sich bewegenden Objekts wird durch das Ergebnis der ersten und zweiten Wahrscheinlichkeitsgleichung P(LLC) und P(RLC) bedingt.

3.  Verfahren nach dem vorhergehenden Anspruch, wobei der erste Variablensatz die Variable EVG zur Definition des Vorhandenseins einer Fahrspur links neben einem Objekt, die Variable VLG zur Definition der linken Seitengeschwindigkeit des Objekts, die Variable CV zur Definition der Fahrspurkrümmung und die Variable ALG zur Definition des linken Gierwinkels umfasst; diese Variablen ermöglichen die Berechnung der Wahrscheinlichkeit P(LLC), dass ein erkanntes sich bewegendes Objekt, das sich auf der Fahrspur (VVP) oder auf der rechts neben der Fahrspur (VVP) des Trägerfahrzeugs (VP) befindlichen Fahrspur (VVP) befindet, einen Spurwechsel nach links (LLC) auslöst, gemäß der Formel: $P(LLC \mid VLG, CV, ALG, EVG) = P(EVG) * P(LLC|VLG, CV, ALG)$, und wobei der zweite Variablensatz die Variable EVD zur Definition des Vorhandenseins einer Fahrspur rechts neben einem Objekt, die Variable VLD zur Definition der rechten Seitengeschwindigkeit eines Objekts, die Variable CV zur Definition der Fahrspurkrümmung und die Variable ALD zur Definition des rechten Gierwinkels umfasst; Mithilfe dieser Variablen kann die Wahrscheinlichkeit P(RLC) berechnet werden, dass ein erkanntes sich bewegendes Objekt, das sich in der Fahrspur (VVP) oder in der links angrenzenden Fahrspur (VOG) der Fahrspur (VVP) des Transportfahrzeugs (VP) befindet, einen Spurwechsel nach rechts (RLC) vornimmt. Die Berechnung erfolgt nach folgender Formel: $P(RLC| VLD,CV,ALD,EVD) = P(EVD) * P(RLC|VLD,CV,ALD)$.

4.  Verfahren nach dem vorhergehenden Anspruch, bestehend aus der Auswahl eines Objekts (OG), falls $P(RLC| VLD,CV,ALD,EVD) = 1$, und falls sich das erkannte Objekt in der angrenzenden Fahrspur links (VOG) der Fahrspur (VVP) des Transportfahrzeugs (VP) befindet.

5.  Verfahren nach Anspruch 3, bestehend aus der Auswahl eines Objekts (OD), falls $P(LLC|VLG,CV,ALG,EVG) = 1$, und falls sich das erkannte Objekt in der angrenzenden Fahrspur rechts (VOD) der Fahrspur (VVP) des Trägerfahrzeugs (VP) befindet.

6. Verfahren nach Anspruch 3, bestehend aus dem Abwählen eines Objekts (VC), wenn *P(RLC|VLD,CV,ALD,EVD)* = 1 oder *P(LLC|VLG,CV,ALG,EVG)* = 1, und wenn sich das erkannte Objekt (VC) in der Fahrspur des Trägerfahrzeugs (VP) befindet.

7. Produktcomputerprogramm mit Anweisungen, die, wenn das Programm von einem Computer ausgeführt wird, den Computer veranlassen, die Schritte des Prozesses gemäß einem der Ansprüche 1 bis 6 durchzuführen.

8. Kraftfahrzeug (VP), das das Verfahren nach einem der Ansprüche 1 bis 6 anwendet.

**Claims**

1. Method for selecting a moving object for implementing an adaptive speed control function, called the ACC function, of a vehicle, called the carrier vehicle (VP), consisting of:

   - to detect (100) objects (OG, VC, OD) travelling on the same lane (VVP) as that of the carrier vehicle (VP) and/or on one or both of the lanes adjacent (VOG, VOD) to the lane (VVP) of the carrier vehicle (VP), in the same direction of travel as the carrier vehicle (VP);
   - for an object (VC) detected in the lane (VVP) of the carrier vehicle (VP), to calculate (200) the probability P(LLC) that the object (VC) makes a lane change, from the lane (VVP) of the carrier vehicle (VP) to the adjacent left lane (VOG) and the probability P(RLC) that the object (VC) makes a lane change, from the lane (VVP) of the carrier vehicle (VP) to the adjacent right lane (VOD);
   - for an object (OG) detected in the left adjacent lane (VOG) of the lane (VVP) of the carrier vehicle (VP), to calculate (300) the probability P(RLC) that said object (OG) makes a lane change to the right;
   - for an object (OD) detected in the right-hand adjacent lane (VOD) of the carrier vehicle's (VP) lane (VVP), calculate (400) the probability P(LLC) that said object (OD) will change lanes to the left; and
   - to select an object (OG, OD) on the left adjacent lane (VOG) and/or on the right adjacent lane (VOD) when the result of the probability equation for lane change to the right lane P(RLC) and/or for lane change respectively to the left lane P(LLC), is equal to "1" and that the said object(s) (OG, OD) have been detected on the left adjacent lane (VOG) and/or on the right adjacent lane (VOD);
   - to deselect an object (VC) located on the lane (VVP) of the carrier vehicle (VP) when the result of the probability equation for a leftward lane change P(LCC) or the result of the probability equation for a rightward lane change P(RLC) is equal to "1" and said object has been detected on the lane (VVP) of the carrier vehicle (VP).

2. A method according to claim 1 consisting of:

   - in a preliminary first step, to select first and second sets of specific binary variables suitable for defining the physical characteristics of a moving object and information relating to the configuration of a track, in preparation situations to a change of lane respectively on the left or on the right; each of the variables being able to take the state "0" or "1" depending on a determined threshold (S);
   - in a second preliminary step, to establish causal and dependency relationships between the variables of each first and second set;
   - in a third preliminary step, from the causal relationships and dependencies between the variables of the first and second sets , to establish the first and second probability equations P(LLC) and P(RLC) that a detected moving object engages in a change of lane on the left, respectively on the right; the selection or deselection of a detected moving object being conditioned by the result of the first and second probability equations P(LLC) and P(RLC).

3. A method according to the preceding claim, wherein the first set of variables comprises the variable EVG defining the existence of a lane adjacent to the left of an object, the variable VLG defining the left lateral velocity of the object, the variable CV defining the curvature of the lane, the variable ALG defining the left yaw angle; these variables allowing the calculation of the probability P(LLC) that a detected moving object, present in the lane (VVP) or in the lane adjacent to the right (VOD) of the lane (VVP) of the carrier vehicle (VP) will initiate a left lane change (LLC), from the formula: *P(LLC | VLG,CV,ALG,EVG) = P(EVG) \* P(LLC|VLG,CV,ALG)*, and wherein the second set of variables comprises the variable EVD defining the existence of a lane adjacent to the right of an object, the variable VLD defining the right lateral velocity of an object, the variable CV defining the curvature of the lane and the variable ALD defining the right yaw angle; these variables allow the probability P(RLC) to be calculated that a detected moving object, present in the lane (VVP) or in the lane adjacent to the left (VOG) of the lane (VVP) of the carrier vehicle (VP) will make a lane change to the right (RLC), from the formula: *P(RLC|VLD,CV,ALD,EVD) = P(EVD) \* P(RLC|VLD,CV,ALD)*.

4. A method according to the preceding claim, consisting of selecting an object (OG) if $P(RLC|VLD,CV,ALD,EVD) = 1$, and if the detected object is in the adjacent lane, to the left (VOG) of the lane (VVP) of the carrier vehicle (VP).

5. Method according to claim 3, consisting of selecting an object (OD) if $P(LLC|VLG,CV,ALG,EVG) = 1$, and if the detected object is in the adjacent lane, to the right (VOD) of the lane (VVP) of the carrier vehicle (VP).

6. Method according to claim 3, consisting of deselected an object (VC) if, $P(RLC|VLD,CV,ALD,EVD) = 1$or $P(LLC|VLG,CV,ALG,EVG) = 1$, and if the detected object (VC) is in the lane of the carrier vehicle (VP).

7. Product computer program comprising instructions which, when the program is executed by a computer, cause the computer to carry out the steps of the process according to any one of claims 1 to 6.

8. Motor vehicle (VP) implementing the method according to one of claims 1 to 6.

[Fig. 1]

[Fig. 2]

[Fig. 3]

[Fig. 4]

[Fig. 5]

[Fig. 6]

[Fig. 7]

[Fig. 8]

[Fig. 9]

**RÉFÉRENCES CITÉES DANS LA DESCRIPTION**

**Documents brevets cités dans la description**

- DE 102009007885 A
- US 2017305422 A